# EUROPÄISCHE PATENTSCHRIFT

(11) **EP 3 499 663 B1**
(45) Veröffentlichungstag und Bekanntmachung des Hinweises auf die Patenterteilung: **10.05.2023**
(21) Anmeldenummer: 18190183.6
(22) Anmeldetag: 22.08.2018
(51) Int. Cl.: H02G 3/04, H02G 3/06, H02G 3/12, H02B 1/30, H05K 5/00, H02G 3/08

(54) **ANORDNUNG, UMFASSEND INSTALLATIONSGEHÄUSE**
ARRANGEMENT COMPRISING INSTALLATION HOUSING
DISPOSITIF COMPORTANT UN BOÎTIER D'INSTALLATION

(30) Priorität: 15.12.2017 DE 202017107663 U
(43) Veröffentlichungstag der Anmeldung: 19.06.2019
(73) Patentinhaber: ABB Schweiz AG, 5400 Baden (CH)
(72) Erfinder: Kilgus, Kai, 76593 Gernsbach (DE); Roth, Michael, 77880 Sasbach (DE)
(74) Vertreter: Wesch, Arno

(56) Entgegenhaltungen:
- EP-A1- 1 835 587
- DE-A1-102013 221 122
- DE-A1-102015 113 900
- DE-U1-202008 015 310
- FR-A1- 2 738 961
- GB-A- 2 507 715
- GB-A- 2 526 766
- US-A1- 2003 079 894

## Beschreibung

Die Erfindung betrifft eine Anordnung nach dem Oberbegriff des Patentanspruchs 1.

Anordnungen dieser Art sind aus der DE 20 2008 015 310 U1, der FR 2 738 961 A1 oder der DE 10 2013 221 122 A1 bekannt.

Aus der DE 10 2015 113 900 A1 ist bereits eine Möglichkeit zum Verbinden zweier Installationsgehäuse bzw. Mauerkästen bekannt geworden. In dieser Druckschrift ist offenbart, dass ein erster Mauerkasten seitlich eine Ausformung aufweist, die mit einer entsprechenden Ausformung eines an den ersten Mauerkasten angereihten zweiten Mauerkastens in Kontakt bringbar ist. Die beiden Ausformungen zusammen bilden in einer aneinandergereihten Konfiguration der Mauerkästen einen im Wesentlichen horizontal orientierten Verbindungskanal.

Durch den horizontalen Verbindungskanal können Kabel oder Leitungen geführt werden, um elektrische Komponenten innerhalb eines Installationsgehäuses, Mauerkastens oder Verteilergehäuses miteinander zu verbinden.

In der Praxis besteht jedoch häufig ein Bedarf, zwei oder mehrere Installationsgehäuse, insbesondere Mauerkästen, in Abhängigkeit von den baulichen oder räumlichen Gegebenheiten zu verbinden, hierfür sind bekannte Anordnungen nur bedingt geeignet.

Der Erfindung liegt daher die Aufgabe zugrunde, mehrere Installationsgehäuse möglichst problemlos und möglichst unabhängig von deren Anzahl und den räumlichen Gegebenheiten miteinander zu verbinden.

Erfindungsgemäß wird die voranstehende Aufgabe durch eine Anordnung mit den Merkmalen des Schutzanspruchs 1 gelöst. In dieser Anordnung der Verbindungskanal als zu den Grundkörpern separates Element ausgebildet oder zumindest abschnittsweise durch ein separates Element gebildet.

Erfindungsgemäß ist zunächst erkannt worden, dass die Installationsgehäuse des Stands der Technik nur seitliche Ausformungen, jedoch keine Ausformungen an einer Oberseite oder Unterseite aufweisen.

Darauf ist erkannt worden, dass Installationsgehäuse unter bestimmten Umständen nicht nur in horizontaler Richtung, sondern auch in vertikaler Richtung miteinander verbunden werden müssen. Dies muss jedoch möglich sein, ohne große Veränderungen an einem Installationsgehäuse vornehmen zu müssen.

Schließlich ist erkannt worden, dass ein separat vorliegendes Element als Verbindungskanal oder zur Schaffung eines Verbindungskanals verwendet werden kann. Ein separates Element kann räumlich in einer Vielzahl von Positionen angeordnet werden. Das separate Element ist nicht darauf ausgelegt, an Seitenwänden festgelegt zu werden, sondern kann auch an Unterseiten oder Oberseiten eines Installationsgehäuses, Mauerkastens oder Verteilerkastens angeordnet werden. So können mehrere Installationsgehäuses in einer Vielzahl von räumlichen Richtungen miteinander durch Verbindungskanäle verbunden werden.

Die Installationsgehäuse können in Abhängigkeit von den baulichen Gegebenheiten miteinander vernetzt werden.

Durch den horizontalen Verbindungskanal können Kabel oder Leitungen geführt werden, um elektrische Komponenten innerhalb eines Installationsgehäuses, Mauerkastens oder Verteilergehäuses miteinander zu verbinden.

Insoweit kann ein Installationsgehäuse als Mauerkasten oder Verteilerkasten ausgebildet sein. Es ist auch denkbar, dass die Verbindungskanäle in einer Neigung zu einem Boden angeordnet werden, welche von einer horizontalen oder vertikalen Orientierung abweicht.

Vorteilhaft ist mindestens ein Element an einer Unterseite und/ oder einer Oberseite eines Installationsgehäuses angeordnet, um mindestens einen vertikal verlaufenden Verbindungskanal auszubilden. Hierdurch können Installationsgehäuse platzsparend übereinander angeordnet werden.

Weiter vorteilhaft ist mindestens ein Element an einer Seite eines Installationsgehäuses angeordnet, welche in eine Unterseite oder Oberseite des Installationsgehäuses mündet, um mindestens einen horizontal verlaufenden Verbindungskanal auszubilden. Hierdurch können Installationsgehäuse auch nebeneinander angeordnet werden.

Weiter vorteilhaft ist zur Schaffung des vertikal verlaufenden Verbindungskanals ein erstes Element vorgesehen ist und ist zur Schaffung des horizontalen Verbindungskanals ein zweites Element vorgesehen, wobei das erste und das zweite Element baugleich sind. So kann eine montierende Person ganz flexibel Elemente einsetzen, um Verbindungskanäle zu schaffen. Es ist nicht notwendig, im Vorfeld einer Montagetätigkeit zu wissen, wieviele horizontale und wieviele vertikale Verbindungskanäle geschaffen werden sollen.

Weiter vorteilhaft besteht das Element nur aus zwei Teilen. So ist relativ leicht und bauteilearm ein Verbindungskanal erzeugbar. Bevorzugt sind die Teile als Halbschalen ausgestaltet. So kann ein Verbindungskanal geschaffen werden, der im Querschnitt im Wesentlichen rechteckförmig ist.

Vorteilhaft ist der Verbindungskanal aus zwei Halbschalen gefertigt, die auf Umschlag zu einem Rechteckkanal zusammenfügbar sind.

Vorteilhaft besteht das Element aus zwei baugleichen Teilen. Zwei baugleiche Teile erleichtern die Lagerhaltung. Die baugleichen Teile sind jeweils abschnittsweise komplementär zueinander ausgebildet, so dass diese problemlos miteinander verbindbar sind.

Vor diesem Hintergrund besteht das Element vorteilhaft aus zwei Teilen, welche miteinander verrastbar sind. Hierdurch ist eine reversible Befestigung der Teile möglich. Die Teile können des Weiteren ohne Werkzeug zusammengefügt werden.

Das Element ist mit einem Adapterteil verbunden. Das Adapterteil ermöglicht, das Element mit einem Installationsgehäuse zu verbinden, welches nicht unmittelbar mit dem Element verbindbar ist. Das Adapterteil ist als zum Element separat vorliegende Komponente ausgestaltet.

Vorteilhaft verbindet das Adapterteil das Element und ein Installationsgehäuse miteinander, wenn ein vertikaler Verbindungskanal gebildet ist. So kann ein vertikaler Verbindungskanal an einem Abschnitt des Installationsgehäuses erzeugt werden, der nicht unmittelbar mit dem Element verbindbar ist. Ein horizontaler Verbindungskanal kann durch unmittelbare Verbindung des Elementes mit einem Installationsgehäuse erzeugt werden.

Das Adapterteil ist auf einen Zugentlastungskamm eines Installationsgehäuses aufgebracht. Das Adapterteil ist als Krallenteil ausgestaltet. Ein anhängendes Krallenteil kann zur Verbindung in vertikaler Richtung auf einen Zugentlastungkamm des Installationsgehäuses aufgesteckt werden.

In der Zeichnung zeigen
- Fig. 1: eine Anordnung, welche drei Installationsgehäuse aufweist, wobei ein Installationsgehäuse durch einen vertikalen und einen horizontalen Verbindungskanal mit jeweils einem benachbarten Installationsgehäuse verbunden ist, wobei in einer oberen Detailansicht der horizontale Verbindungskanal und einer unteren Detailansicht der vertikale Verbindungskanal dargestellt ist,
- Fig. 2: eine Detailansicht des vertikalen Verbindungskanals gemäß Fig. 1, wobei ein Adapterteil auf den Zugentlastungskamm eines vertikal benachbarten Installationsgehäuses aufgesteckt ist,
- Fig. 3: eine Detailansicht des horizontalen Verbindungskanals gemäß Fig. 1,
- Fig. 4: die Anordnung gemäß Fig. 1, welche drei Installationsgehäuse aufweist, wobei ein Installationsgehäuse durch einen vertikalen und einen horizontalen Verbindungskanal mit jeweils einem benachbarten Installationsgehäuse verbindbar ist, wobei in einer oberen Detailansicht das Element zur Ausbildung des horizontalen Verbindungskanals und einer unteren Detailansicht das Element zur Ausbildung des vertikalen Verbindungskanals dargestellt ist,
- Fig. 5: links eine Detailansicht des Elements zur Ausbildung des vertikalen Verbindungskanals gemäß Fig. 4, wobei ein Adapterteil auf den Zugentlastungskamm eines vertikal benachbarten Installationsgehäuses bereits aufgesteckt ist und wobei das Element bereits an einem ersten Installationsgehäuse angeordnet ist, und rechts eine Detailansicht des Elements zur Ausbildung des horizontalen Verbindungskanals gemäß Fig. 4, wobei das Element an dem ersten Installationsgehäuse bereits angeordnet ist,
- Fig. 6: eine Detailansicht des Elements zur Ausbildung des vertikalen Verbindungskanals gemäß Fig. 4, wobei ein Adapterteil auf den Zugentlastungskamm eines vertikal benachbarten Installationsgehäuses bereits aufgesteckt ist und wobei das Element bereits an einem ersten Installationsgehäuse angeordnet ist,
- Fig. 7: eine Detailansicht des Elements zur Ausbildung des horizontalen Verbindungskanals gemäß Fig. 4, wobei das Element an dem ersten Installationsgehäuse bereits angeordnet ist,
- Fig. 8: links eine perspektivische Ansicht eines Elements zur Ausbildung eines horizontalen oder vertikalen Verbindungskanals gemäß Fig. 4, und rechts zwei verrastbare Teile zur Ausbildung des Elements,
- Fig. 9: eine perspektivische Ansicht eines Elements zur Ausbildung eines horizontalen oder vertikalen Verbindungskanals gemäß Fig. 4, und
- Fig. 10: links ein Teil des Elements und das Adapterteil in einer ersten Ansicht und rechts das Teil und das Adapterteil in einer zweiten Ansicht.

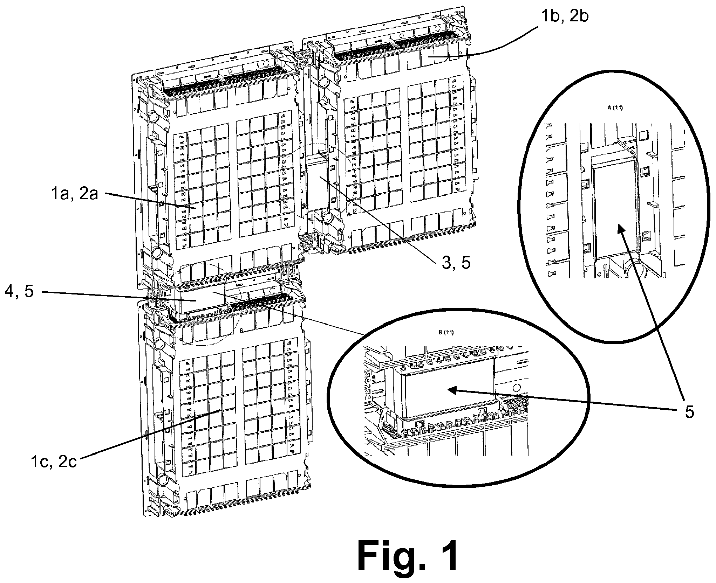

Fig. 1 zeigt eine Anordnung, umfassend drei Installationsgehäuse 1a, 1b, 1c, wobei jedes Installationsgehäuse 1a, 1b, 1c einen Grundkörper 2a, 2b, 2c mit einem nicht gezeigten Innenraum aufweist und wobei die Grundkörper 2a, 2b, 2c und die Innenräume durch mindestens einen Verbindungskanal 3, 4 miteinander verbunden sind.

Jeder Verbindungskanal 3, 4 ist als zu den Grundkörpern 2a, 2b, 2c separates Element 5 ausgebildet. In einem Verbindungskanal 3, 4 können Leitungen von einem Innenraum zu einem anderen geführt werden.

Ein Element 5 ist an einer Unterseite eines ersten Installationsgehäuses 1a und zugleich an einer Oberseite eines weiteren Installationsgehäuses 1c angeordnet, um mindestens einen vertikal verlaufenden Verbindungskanal 4 auszubilden.

Mindestens ein weiteres Element 5 ist an einer Seite des ersten Installationsgehäuses 1a angeordnet, welche in eine Unterseite oder Oberseite dieses Installationsgehäuses 1a mündet, um den horizontal verlaufenden Verbindungskanal 3 auszubilden. Die Seite, von welcher der horizontale Verbindungskanal 3 abragt, ist eine sich im Wesentlichen vertikal erstreckende Seite des Installationsgehäuses 1a.

Zur Schaffung des vertikal verlaufenden Verbindungskanals 4 ist ein erstes Element 5 vorgesehen und zur Schaffung des horizontalen Verbindungskanals 3 ist ein zweites Element 5 vorgesehen, wobei das erste und das zweite Element 5 baugleich sind.

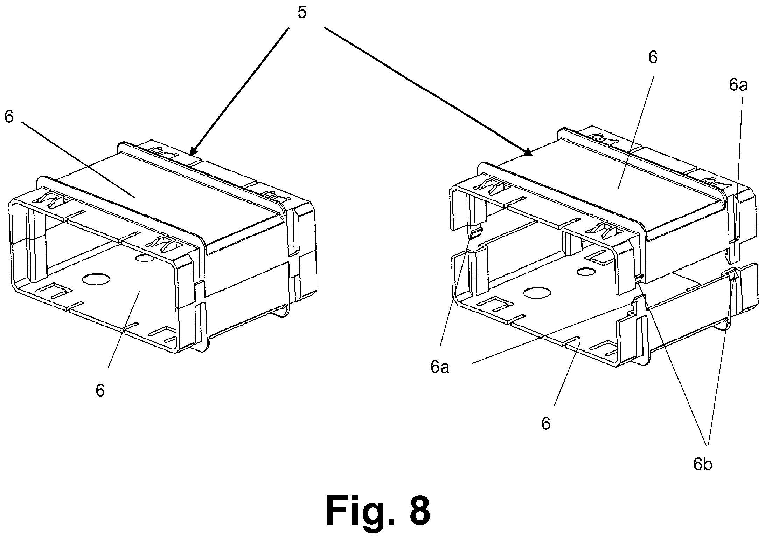

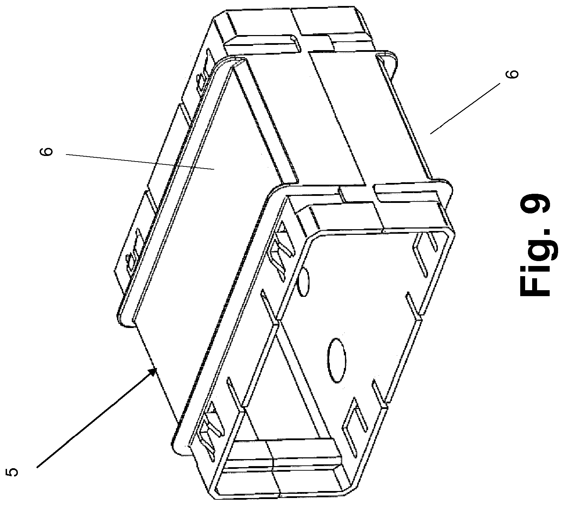

Fig. 8 und 9 zeigen, dass das Element 5 nur aus zwei Teilen 6 besteht. Das Element 5 besteht aus nur zwei baugleichen Teilen 6. Das Element 5 besteht konkret aus zwei Teilen 6, welche miteinander verrastbar sind.

Hierzu sind an jedem Teil 6 Rastzungen 6a vorgesehen, welche mit komplementär zu diesen ausgebildeten Rastmitteln 6b am jeweils anderen Teil 6 verrastbar sind. Konkret sind an jedem Teil 6 zwei Rastzungen 6a und zwei Rastmittel 6b vorgesehen.

Fig. 8 und 9 zeigen, dass die Teile 6 einen Verbindungskanal 3 bzw. 4 mit einer im Wesentlichen rechteckförmigen inneren Querschnittsfläche ausbilden.

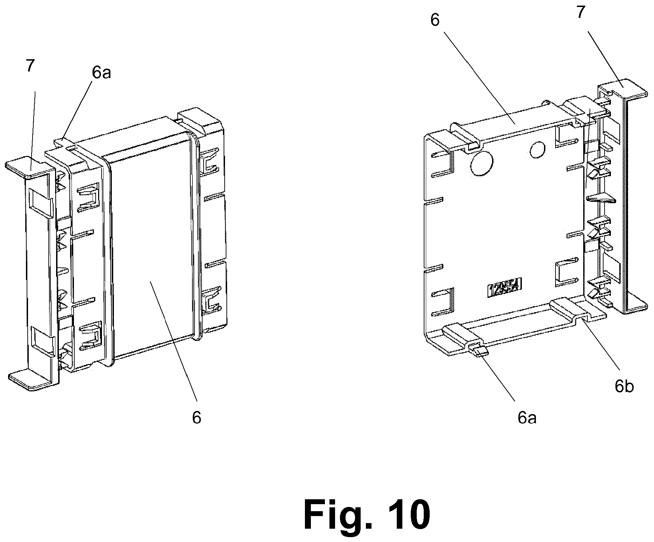

Fig. 10 zeigt, dass das Element 5 mit einem Adapterteil 7 verbindbar oder verbunden ist. Das Adapterteil 7 verbindet das Element 5 und das Installationsgehäuse 1c miteinander, wenn ein vertikaler Verbindungskanal 4 gebildet ist. Das Adapterteil 7 ist auf einen Zugentlastungskamm 8 des Installationsgehäuses 1c aufgebracht. Dies ist in Fig. 1, Fig. 2, Fig. 4, Fig. 5 und Fig. 6 dargestellt.

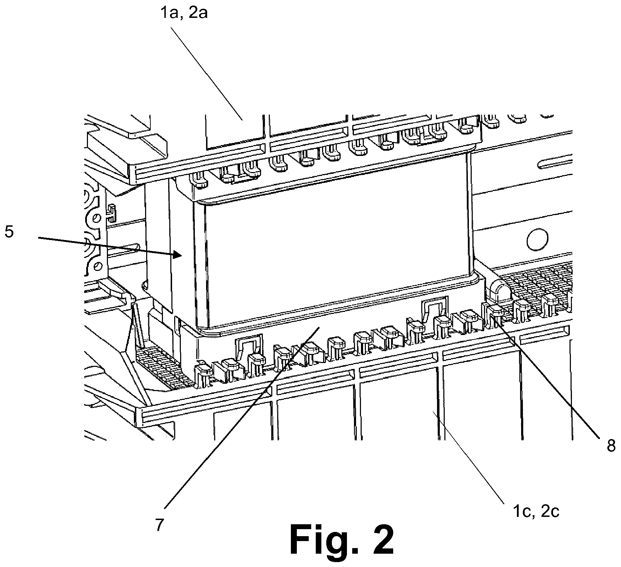

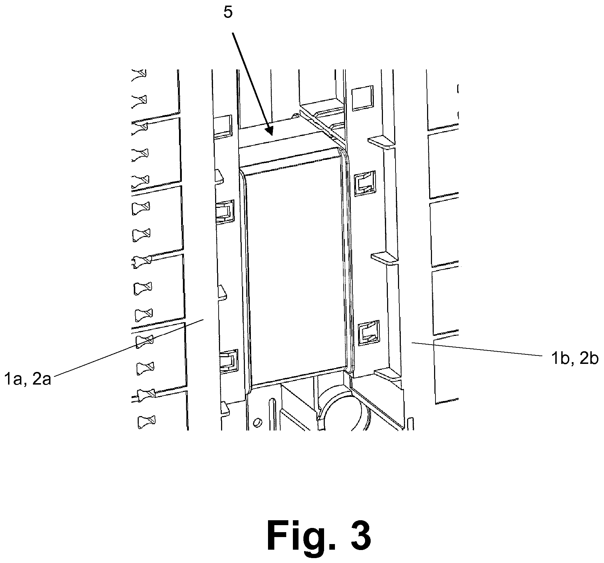

Fig. 2 zeigt eine Detailansicht des vertikalen Verbindungskanals 4 gemäß Fig. 1, wobei das Adapterteil 7 auf den Zugentlastungskamm 8 des vertikal benachbarten Installationsgehäuses 1c aufgesteckt ist. Fig. 3 zeigt eine Detailansicht des horizontalen Verbindungskanals 3 gemäß Fig. 1.

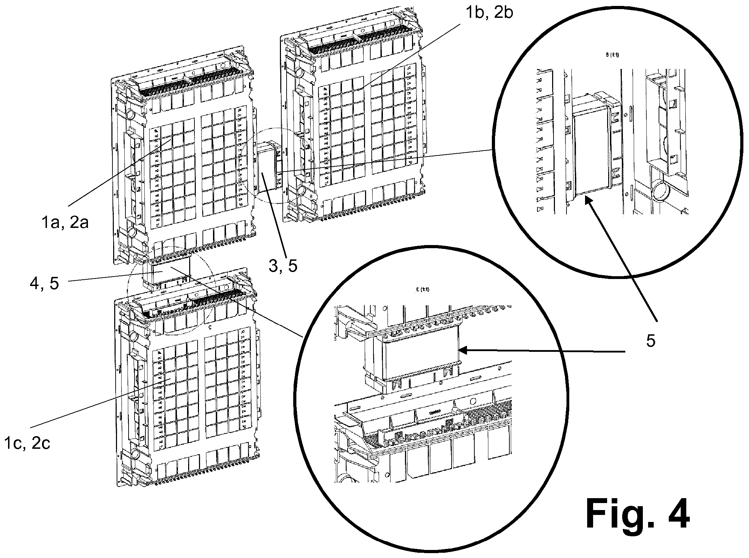

Fig. 4 zeigt die Anordnung gemäß Fig. 1, welche drei Installationsgehäuse 1a, 1b, 1c aufweist, wobei ein erstes Installationsgehäuse 1a durch einen vertikalen Verbindungskanal 4 und einen horizontalen Verbindungskanal 3 mit jeweils einem unten benachbarten bzw. seitlich benachbarten Installationsgehäuse 1c, 1b verbindbar ist. In einer oberen Detailansicht ist das Element 5 zur Ausbildung des horizontalen Verbindungskanals 3 und in einer unteren Detailansicht das Element 5 zur Ausbildung des vertikalen Verbindungskanals 4 dargestellt.

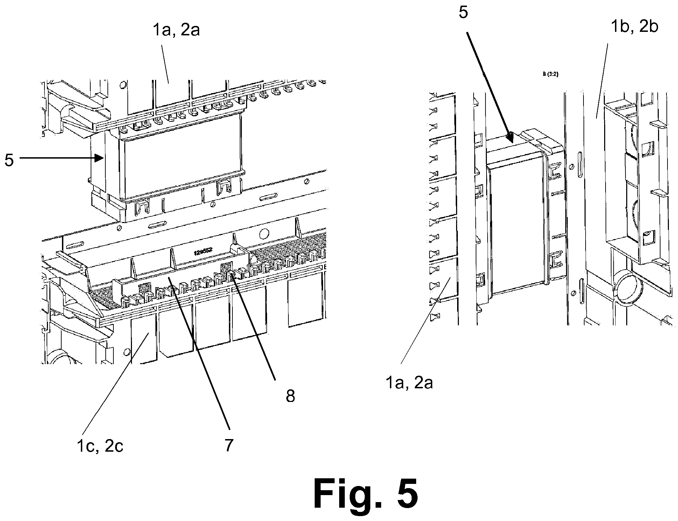

Fig. 5 zeigt links eine Detailansicht des Elements 5 zur Ausbildung des vertikalen Verbindungskanals 4 gemäß Fig. 4, wobei das Adapterteil 7 auf den Zugentlastungskamm 8 des vertikal benachbarten Installationsgehäuses 1c bereits aufgesteckt ist. Das Element 5 ist bereits am ersten Installationsgehäuse 1a angeordnet. Rechts ist eine Detailansicht des Elements 5 zur Ausbildung des horizontalen Verbindungskanals 3 gemäß Fig. 4 dargestellt, wobei das Element 5 an dem ersten Installationsgehäuse 1a bereits angeordnet ist.

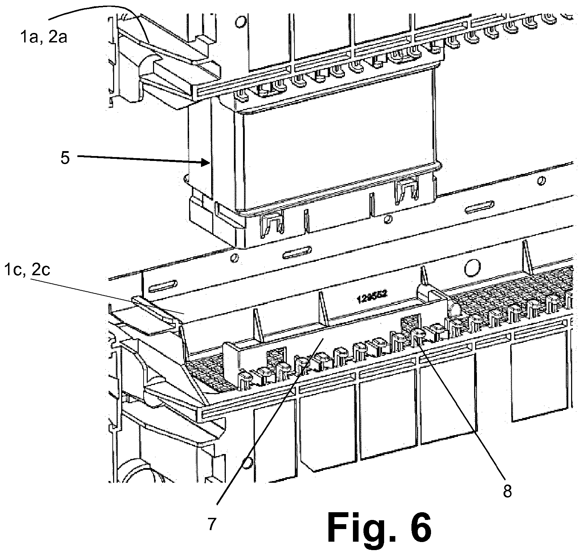

Fig. 6 zeigt eine Detailansicht des Elements 5 zur Ausbildung des vertikalen Verbindungskanals 4 gemäß Fig. 4, wobei das Adapterteil 7 auf den Zugentlastungskamm 8 des vertikal benachbarten Installationsgehäuses 1c bereits aufgesteckt ist und wobei das Element 5 bereits am ersten Installationsgehäuse 1a angeordnet ist.

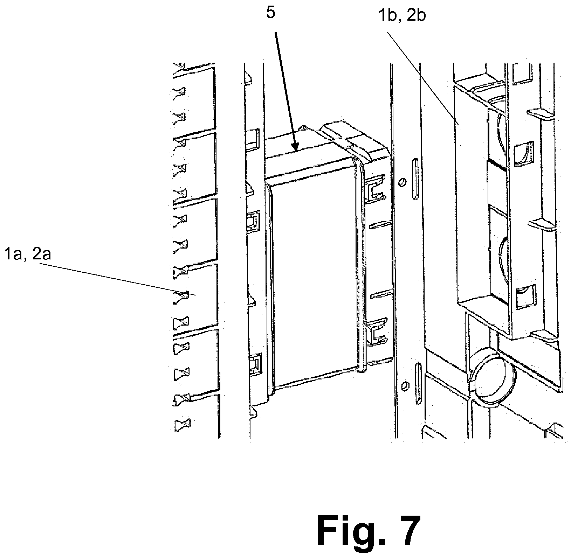

Fig. 7 zeigt eine Detailansicht des Elements 5 zur Ausbildung des horizontalen Verbindungskanals 3 gemäß Fig. 4, wobei das Element 5 an dem ersten Installationsgehäuse 1a bereits angeordnet ist.

**Bezugszeichenliste**

| | |
|---|---|
| 1a-c | Installationsgehäuse |
| 2a-c | Grundkörper von 1a-c |
| 3 | Horizontaler Verbindungskanal |
| 4 | Vertikaler Verbindungskanal |
| 5 | Element |
| 6 | Teil von 5 |
| 6a | Rastzunge von 6 |
| 6b | Rastmittel von 6 |
| 7 | Adapterteil |
| 8 | Zugentlastungskamm |

## Patentansprüche

1. Anordnung, umfassend mindestens zwei Installationsgehäuse (1a-c), mindestens einen Verbindungskanal (3, 4) und ein Adapterteil (7), wobei jedes Installationsgehäuse (1a-c) einen Grundkörper (2a-c) mit einem Innenraum aufweist und mindestens ein erstes (1c) der Installationsgehäuse (1a-c) einen Zugentlastungskamm (8) umfasst, wobei die Grundkörper (2a-c) und/ oder die Innenräume durch den Verbindungskanal (3, 4) miteinander verbunden sind, wobei der Verbindungskanal (3, 4) als zu den Grundkörpern (2a-c) separates Element (5) ausgebildet ist oder zumindest abschnittsweise durch ein separates Element (5) gebildet ist und wobei das Element (5) mit dem Adapterteil (7) verbunden ist, **dadurch gekennzeichnet, dass** das Adapterteil (7) als Krallenteil ausgebildet und auf den Zugentlastungskamm (8) aufgesteckt ist, um das Element (5) mit dem ersten Installationsgehäuse (1c) zu verbinden, wobei das Adapterteil (7) als zum Element (5) separate Komponente ausgestaltet ist.

2. Anordnung nach Anspruch 1, **dadurch gekennzeichnet, dass** mindestens ein Element (5) an einer Unterseite und/ oder einer Oberseite eines Installationsgehäuses (1a, 1c) angeordnet ist, um mindestens einen vertikal zu einem Boden orientiert verlaufenden Verbindungskanal (4) auszubilden.

3. Anordnung nach Anspruch 1 oder 2, **dadurch gekennzeichnet, dass** mindestens ein Element (5) an einer Seite eines Installationsgehäuses (1a) angeordnet ist, welche in eine Unterseite oder Oberseite des Installationsgehäuses (1a) mündet, um mindestens einen horizontal zu einem Boden orientiert verlaufenden Verbindungskanal (3) auszubilden.

4. Anordnung nach Anspruch 2 und 3, **dadurch gekennzeichnet, dass** zur Schaffung des vertikal verlaufenden Verbindungskanals (4) ein erstes Element (5) vorgesehen ist und dass zur Schaffung des horizontalen Verbindungskanals (3) ein zweites Element (5) vorgesehen ist, wobei das erste und das zweite Element (5) baugleich sind.

5. Anordnung nach einem der voranstehenden Ansprüche, **dadurch gekennzeichnet, dass** das Element (5) aus zwei Teilen (6) besteht.

6. Anordnung nach einem der voranstehenden Ansprüche, **dadurch gekennzeichnet, dass** das Element (5) aus zwei baugleichen Teilen (6) besteht.

7. Anordnung nach einem der voranstehenden Ansprüche, **dadurch gekennzeichnet, dass** das Element (5) aus zwei Teilen (6) besteht, welche miteinander verrastbar sind.

8. Anordnung nach einem der voranstehenden Ansprüche, **dadurch gekennzeichnet, dass** das Adapterteil (7) das Element (5) und ein Installationsgehäuse (1c) miteinander verbindet, wenn ein vertikaler Verbindungskanal (4) gebildet ist.

## Claims

1. Arrangement comprising at least two installation housings (1a-c), at least one connecting channel (3, 4) and an adapter part (7), wherein each installation housing (1a-c) has a main body (2a-c) with an internal space and at least a first (1c) of the installation housings (1a-c) comprises a strain relief comb (8), wherein the main bodies (2a-c) and/or the internal spaces are connected to each other by the connecting channel (3, 4), wherein the connecting channel (3, 4) is formed as an element (5) that is separate from the main bodies (2a-c) or is at least partly formed by a separate element (5), and wherein the element (5) is connected to the adapter part (7), **characterized in that** the adapter part (7) is formed as a claw part and is plugged onto the strain relief comb (8) in order to connect the element (5) to the first installation housing (1c), wherein the adapter part (7) is configured as a component separate from the element (5).

2. Arrangement according to Claim 1, **characterized in that** at least one element (5) is arranged on an underside and/or an upper side of an installation housing (1a, 1c) in order to form at least one connecting channel (4) running vertically relative to a base.

3. Arrangement according to Claim 1 or 2, **characterized in that** at least one element (5) is arranged on a side of an installation housing (1a) which opens into an underside or upper side of the installation housing (la), in order to form at least one connecting channel (3) running horizontally relative to a base.

4. Arrangement according to Claim 2 and 3, **characterized in that** a first element (5) is provided in order to create the connecting channel (4) running vertically, and **in that** a second element (5) is provided in order to create the horizontal connecting channel (3), wherein the first and the second element (5) are identical.

5. Arrangement according to one of the preceding claims, **characterized in that** the element (5) consists of two parts (6).

6. Arrangement according to one of the preceding claims, **characterized in that** the element (5) consists of two identical parts (6).

7. Arrangement according to one of the preceding claims, **characterized in that** the element (5) consists of two parts (6) which can be latched to each other.

8. Arrangement according to one of the preceding claims, **characterized in that** the adapter part (7) connects the element (5) and an installation housing (1c) to each other if a vertical connecting channel (4) is formed.

## Revendications

1. Agencement, comprenant au moins deux boîtiers d'installation (1a-c), au moins un canal de liaison (3, 4) et une pièce d'adaptation (7), chaque boîtier d'installation (1a-c) présentant un corps de base (2a-c) avec un espace intérieur et au moins un premier (1c) des boîtiers d'installation (1a-c) comprenant un peigne serre-câbles (8), les corps de base (2a-c) et/ou les espaces intérieurs étant reliés entre eux par le canal de liaison (3, 4), le canal de liaison (3, 4) étant réalisé sous forme d'élément (5) séparé des corps de base (2a-c) ou étant formé au moins par sections par un élément séparé (5) et l'élément (5) étant relié à la pièce d'adaptation (7), **caractérisé en ce que** la pièce d'adaptation (7) est réalisée sous forme de pièce à griffes et est enfichée sur le peigne serre-câbles (8) afin de relier l'élément (5) au premier boîtier d'installation (1c), la pièce d'adaptation (7) étant conçue sous forme de composant séparé de l'élément (5).

2. Agencement selon la revendication 1, **caractérisé en ce qu'**au moins un élément (5) est agencé sur un côté inférieur et/ou un côté supérieur d'un boîtier d'installation (1a, 1c) afin de réaliser au moins un canal de liaison (4) s'étendant en étant orienté verticalement par rapport à un sol.

3. Agencement selon la revendication 1 ou 2, **caractérisé en ce qu'**au moins un élément (5) est agencé sur un côté d'un boîtier d'installation (la) qui débouche dans un côté inférieur ou un côté supérieur du boîtier d'installation (la) afin de réaliser au moins un canal de liaison (3) s'étendant en étant orienté horizontalement par rapport à un sol.

4. Agencement selon les revendications 2 et 3, **caractérisé en ce qu'**un premier élément (5) est prévu pour créer le canal de liaison (4) s'étendant verticalement et **en ce qu'**un deuxième élément (5) est prévu pour créer le canal de liaison (3) horizontal, le premier et le deuxième élément (5) étant de construction identique.

5. Agencement selon l'une quelconque des revendications précédentes, **caractérisé en ce que** l'élément (5) est constitué de deux pièces (6).

6. Agencement selon l'une quelconque des revendications précédentes, **caractérisé en ce que** l'élément (5) est constitué de deux pièces (6) de construction identique.

7. Agencement selon l'une quelconque des revendications précédentes, **caractérisé en ce que** l'élément (5) est constitué de deux pièces (6) qui peuvent être encliquetées l'une avec l'autre.

8. Agencement selon l'une quelconque des revendications précédentes, **caractérisé en ce que** la pièce d'adaptation (7) relie entre eux l'élément (5) et un boîtier d'installation (1c) lorsqu'un canal de liaison vertical (4) est formé.
